# DEMANDE DE BREVET EUROPEEN

(11) **EP 2 607 047 A1**
(43) Date de publication de la demande: **26.06.2013**
(21) Numéro de dépôt: 12194044.9
(22) Date de dépôt: 23.11.2012
(51) Int. Cl.: B29C 45/27, B29C 45/00

(54) **Dispositif de moulage d'un élément comportant une lèvre**

(30) Priorité: 19.12.2011 FR 1161912
(71) Demandeur: VALEO VISION, 93012 Bobigny Cedex (FR)
(72) Inventeur: Gosselin, François, 49000 ANGERS (FR)

(57) **Abrégé**

L'invention concerne un dispositif de moulage (10) comprenant une cavité de moulage (18) d'un élément en plastique et une busette d'injection (32) de matière plastique comprenant un orifice de sortie (34) de matière plastique, sensiblement circulaire, débouchant dans la cavité (18) qui comprend une rainure (22) destinée à former une lèvre de l'élément en plastique. L'orifice de sortie (34) de la busette (32) débouche, par un fond (30) de la rainure (22), dans un élargissement localisé (36) de cette rainure (22) et forme un canal (38) sensiblement de révolution dont l'extrémité de communication (40) avec l'orifice de sortie (34) de la busette (32) a un diamètre supérieur ou égal à celui de cet orifice de sortie (34), cet élargissement (36) étant destiné à former une surépaisseur localisée (42) de la lèvre de l'élément en plastique.

Le dispositif comporte au moins deux parties, respectivement fixe (14) et mobile (16), déplaçables l'une par rapport à l'autre sensiblement parallèlement à une direction dite d'ouverture et de fermeture du dispositif (10), l'orifice de sortie (34) de matière plastique de la busette (32) formant une extrémité d'un canal chaud d'éjection de matière plastique de cette busette (32), sensiblement perpendiculaire à la surface à injecter, au moins une de ces parties participant à la délimitation de la cavité (18).

## Description

La présente invention concerne le domaine du moulage par injection d'un élément en plastique, notamment d'une glace pour projecteur de véhicule automobile.

Lorsque l'on désire réaliser des éléments en plastique ayant une faible épaisseur, il n'est pas toujours possible, pour des raisons techniques ou esthétiques, de venir injecter la matière plastique perpendiculairement à une surface de l'élément sans utiliser un canal froid.

On entend par canal froid un canal ménagé dans un dispositif de moulage dans lequel subsiste, après injection de matière, une carotte reliée à l'élément moulé tant que ce dernier est dans le moule. Cette carotte est destinée à être séparée de l'élément moulé et est donc perdue.

Par exemple, pour des raisons de sécurité et d'esthétique, les glaces des projecteurs avant d'un véhicule automobile ne peuvent pas comporter de marque d'injection ou d'éjection dans les zones de la glace ayant des fonctions optiques. Il est donc nécessaire d'injecter la matière plastique dans des zones de la glace qui n'ont pas de fonction optique ou qui ne sont pas visibles lorsque le bloc optique est monté sur le véhicule automobile.

On connaît, du document WO2011/033538, une busette d'injection permettant de mouler un élément en plastique par l'injection de matière plastique directement dans le fond d'une nervure afin d'éviter l'utilisation d'un canal froid. La forme de l'orifice de la busette a été modifiée afin de s'adapter à l'épaisseur du fond de la nervure de l'organe à mouler. On comprend que ce type de busette n'est pas standard et requiert que la busette soit orientée de manière précise afin que l'axe principal de l'orifice soit aligné avec la nervure de l'élément. Le coût de telles busettes est relativement élevé.

L'invention a pour but de proposer un dispositif d'injection d'un élément en matière plastique de faible épaisseur qui utilise des busettes d'injection standards dont l'orifice est de section circulaire.

A cet effet, l'invention a pour objet un dispositif de moulage comprenant une cavité de moulage d'un élément en plastique et une busette d'injection de matière plastique comprenant un orifice de sortie de matière plastique, sensiblement circulaire, débouchant dans la cavité, cette cavité comprenant une rainure destinée à former une lèvre de l'élément en plastique, **caractérisé en ce que** l'orifice de sortie de la busette débouche, par un fond de la rainure, dans un élargissement localisé de cette rainure formant un canal sensiblement de révolution dont l'extrémité de communication avec l'orifice de sortie de la busette a un diamètre supérieur ou égal à celui de cet orifice de sortie, cet élargissement étant destiné à former une surépaisseur localisée de la lèvre de l'élément en plastique, et en ce que le dispositif comporte au moins deux parties, respectivement fixe et mobile, déplaçables l'une par rapport à l'autre sensiblement parallèlement à une direction dite d'ouverture et de fermeture du dispositif, l'orifice de sortie de matière plastique de la busette formant une extrémité d'un canal chaud d'éjection de matière plastique de cette busette, sensiblement perpendiculaire à la surface à injecter, au moins une de ces parties participant à la délimitation de la cavité.

On définit la partie fixe et mobile du dispositif de moulage par rapport à l'unité d'injection. Ainsi, une partie peut se déplacer mais être quand même qualifiée de fixe dès lors que son déplacement est lié au déplacement de l'unité d'injection, c'est-à-dire qu'il n'y a pas de déplacement relatif de l'unité d'injection par rapport à cette partie. On comprend que sensiblement perpendiculaire comprend le cas dans lequel le canal chaud est perpendiculaire à la surface à injecter mais également le cas dans lequel le canal chaud forme un angle de quelques degrés avec cette direction, l'angle étant de préférence inférieur à 15 degrés.

Grâce au dispositif de moulage de l'invention, on peut mouler un élément en plastique de faible épaisseur de façon économique tout en s'adaptant à une grande variété de géométrie d'élément à mouler en injectant la matière plastique par le fond de la rainure.

Il n'est plus nécessaire de disposer la busette sensiblement perpendiculairement à une surface de l'élément à mouler et ce, grâce à l'élargissement localisé de la rainure formant un canal sensiblement de révolution dont l'extrémité de communication avec l'orifice de sortie de la busette a un diamètre supérieur ou égal à celui de cet orifice de sortie.

Le canal permet de s'assurer que l'écoulement de matière plastique dans la cavité est réalisé de manière adéquate.

On comprend que l'élargissement localisé de la rainure est positionné dans une partie de la rainure délimitée, par exemple, par des flancs sensiblement parallèles à la direction d'ouverture et de fermeture du dispositif de moulage formant la cavité, les flancs étant reliés entre eux par le fond de la rainure.

On notera que l'on peut utiliser plusieurs busettes pour mouler un élément. La cavité peut donc comporter plusieurs élargissements localisés de la rainure.

Il est donc possible de positionner librement un point d'injection sur le fond de la rainure pour optimiser le remplissage de la cavité.

Comme l'orifice de sortie de la busette débouche directement par le fond de la rainure dans la cavité, il n'y a pas de canaux froids. Il n'y a donc pas de perte de matière.

En outre, l'utilisation de busettes standards circulaires permet de diminuer sensiblement le coût de l'outillage, d'améliorer la qualité du seuil d'injection, c'est-à-dire de l'extrémité de communication du canal de révolution avec l'orifice de sortie de la busette, et ne nécessite pas une orientation précise de la busette par rapport à la lèvre de l'élément.

Le dispositif de moulage peut en outre comporter l'une ou plusieurs des caractéristiques suivantes, prises seules ou en combinaison.
- La rainure a une forme générale annulaire.
- La lèvre de l'élément en plastique a une forme générale divergente en s'éloignant d'un bord libre de cette lèvre.
- L'élément en plastique est un élément de glace de dispositif optique pour véhicule automobile, la lèvre de l'élément étant destinée à s'emboîter dans une rainure complémentaire d'un boîtier du dispositif optique, si bien que la surépaisseur est au moins partiellement masquée dans la rainure complémentaire.
- L'élément de glace est un masque de glace de projecteur pour véhicule automobile.

L'invention a également pour objet un procédé de fabrication d'un organe en plastique par moulage par injection, **caractérisé en ce que** l'on moule un élément au moins de cet organe dans un dispositif tel que défini précédemment.

On comprend que l'on peut également mouler tout l'organe.

L'invention a aussi pour objet un procédé de fabrication d'un organe en plastique bi-matière par moulage par injection, **caractérisé en ce que** l'on moule un élément en une première matière puis on surmoule un élément en une seconde matière sur l'élément dans la première matière au moyen d'un dispositif tel que défini précédemment, la lèvre étant formée sur l'élément dans la seconde matière.

Dans un mode de réalisation, la première matière est transparente et la seconde matière est opaque.

L'invention concerne également une glace pour projecteur de véhicule automobile, **caractérisée en ce qu'**elle est obtenue par un procédé tel que défini précédemment et en ce qu'elle comporte une lèvre comprenant une surépaisseur localisée de forme sensiblement de révolution.

La glace peut également comprendre un élément transparent et un élément opaque, formant masque, surmoulé sur cet élément transparent.

L'invention sera mieux comprise à la lecture de la description qui va suivre, donnée uniquement à titre d'exemple et faite en se référant aux dessins dans lesquels :
- la figure 1 est une vue partielle en coupe d'un dispositif selon un premier mode de réalisation de l'invention ;
- la figure 2 est une vue partielle en perspective de la lèvre d'un élément plastique selon l'invention ;
- les figures 3, 4 et 5 sont des vues schématiques en coupe de différents positionnements de la surépaisseur localisée sur la lèvre de l'élément ;
- la figure 6 est une vue partielle en coupe d'un dispositif selon un deuxième mode de réalisation de l'invention ;
- la figure 7 est une vue en perspective d'un élément obtenu selon un procédé mettant en oeuvre le dispositif selon le deuxième mode de réalisation de l'invention ;
- la figure 8 est un agrandissement de la figure 7.

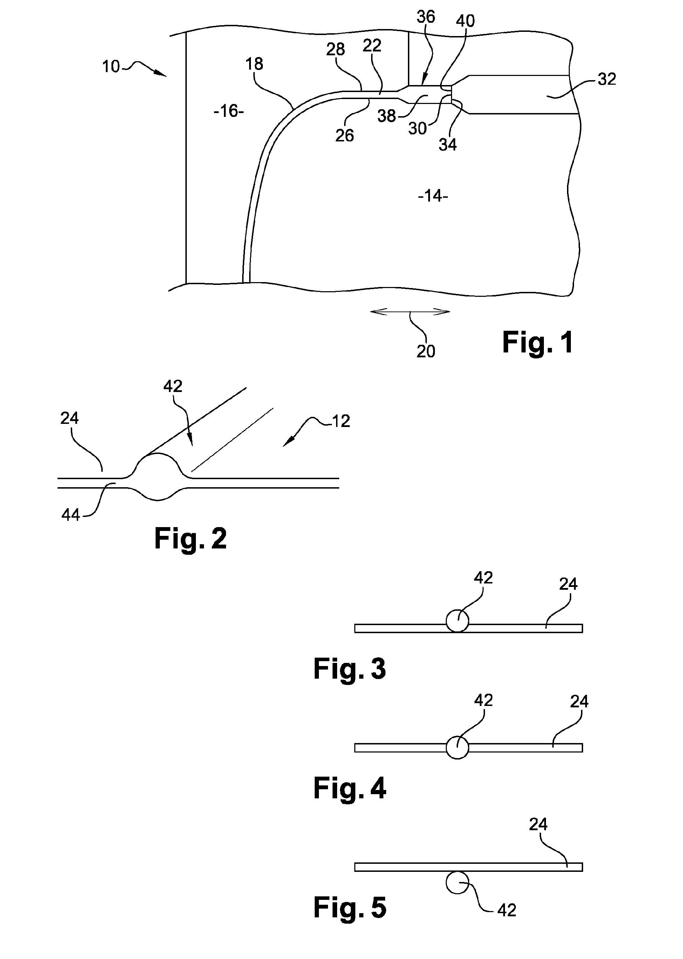

On a représenté sur la figure 1 un dispositif de moulage 10 d'un élément en plastique 12. La partie de l'élément en plastique 12 intéressante pour la description de ce mode de réalisation de l'invention est représentée à la figure 2.

Le dispositif comporte, dans ce mode de réalisation particulier, une partie fixe 14 et une partie mobile 16.

La partie fixe 14 définit, avec la partie mobile 16, une cavité de moulage 18 de l'élément 12, la partie mobile 16 se déplaçant par rapport à la partie fixe selon la direction d'ouverture et de fermeture du dispositif 10 représentée par la double flèche 20.

La cavité 18 comprend une rainure 22 destinée à former une lèvre 24 de l'élément 12. Cette rainure 22 est sensiblement parallèle à la direction d'ouverture et de fermeture du dispositif 10. Elle est délimitée par des flancs 26, 28 sensiblement parallèles à la direction d'ouverture et de fermeture du dispositif 10, les flancs 26, 28 étant reliés entre eux par un fond 30 de la rainure 22. On comprend que les flancs 26, 28 ne sont pas obligatoirement parallèles à la direction d'ouverture et de fermeture du dispositif 10, ils peuvent par exemple former un angle avec la direction d'ouverture et de fermeture du dispositif 10 et la rainure 22 est par exemple de forme générale divergente en s'éloignant du fond 30 de la rainure 22. La rainure elle-même peut également former un angle avec la direction d'ouverture et de fermeture du dispositif 10, cet angle est préférentiellement inférieur à 10°, encore plus préférentiellement inférieur à 5°, il peut par exemple être d'environ 3°.

Ce dispositif 10 comprend également une busette d'injection de matière plastique 32 comportant un orifice de sortie 34, sensiblement circulaire, débouchant dans la cavité 18 par le fond 30 de la rainure 22 dans un élargissement localisé 36 de la rainure 22.

Cet élargissement localisé 36 forme un canal 38 sensiblement de révolution dont l'extrémité 40 de communication avec l'orifice de sortie 34 de la busette 32 a un diamètre supérieur ou égal à celui de l'orifice de sortie 34.

Le canal 38 peut prendre la forme d'un cône de révolution convergent lorsque l'on s'éloigne de l'extrémité 40. Il peut également avoir une forme cylindrique ou toute forme adéquate à l'injection de matière plastique dans la cavité 18 du dispositif 10.

Lors du moulage de l'élément 12, l'élargissement localisé 36 de la rainure 22, forme sur l'élément 12 une surépaisseur localisée 42 de la lèvre 24. Cette lèvre a donc une forme sensiblement de révolution et peut, par exemple, avoir la forme d'un cône de révolution de forme générale divergente en s'éloignant du bord libre 44 de cette lèvre 24.

L'orifice de sortie 34 de la busette 32, débouchant directement dans le fond 30 de la rainure 22, forme une extrémité d'un canal chaud d'éjection de matière plastique de la busette 32. La busette 32 et son canal peuvent être inclinés par rapport à la direction d'ouverture et de fermeture du dispositif 20, d'un angle compris entre 0 et 45 degrés, mais ils sont sensiblement perpendiculaires à la surface à injecter, d'un angle compris entre 0 et 15 degrés.

Cette busette comprend également une aiguille (non représentée) permettant de fermer l'orifice de sortie 34 de la busette 32 et d'éviter de gaspiller du plastique entre deux opérations de moulage.

Les figures 3, 4 et 5 présentent de façon très schématique le positionnement de la surépaisseur 42 sur la lèvre 24 de l'élément 12.

Sur la figure 3, la surépaisseur 42 est positionnée de sorte qu'elle n'est visible que sur une face de la lèvre 24 et que la surépaisseur est minimum. Sur la figure 4, la surépaisseur 42 et la lèvre 24 sont centrées l'une par rapport à l'autre ; la surépaisseur 42 est visible sur les deux faces de la lèvre 24. Enfin, sur la figure 5, la surépaisseur 42 n'est visible que sur une face de la lèvre 24 et la surépaisseur est maximum. Ces trois représentations sont des cas particuliers. Tous les cas intermédiaires peuvent évidemment être réalisés.

Il est à noter que la section de la surépaisseur 42 est toujours en contact avec la section de la lèvre 24, c'est-à-dire que le canal 38 est en communication avec la rainure 22 de la cavité 18.

Cet élément 12 peut être un élément de glace de dispositif optique pour véhicule automobile, la lèvre 24 étant destinée à s'emboîter dans une rainure complémentaire d'un boîtier du dispositif d'optique, si bien que la surépaisseur 42 est au moins partiellement masquée dans la rainure complémentaire du boîtier. Par exemple, cet élément de glace peut être un masque de glace de projecteur pour véhicule automobile et avoir, par exemple, une forme générale annulaire.

Afin de mouler l'élément 12, le dispositif 10 est fermé, c'est-à-dire que la partie mobile 16 est déplacée dans son sens de fermeture vers la partie fixe 14. Une fois le dispositif 10 fermé, on injecte par la buse 32 la matière plastique dans la cavité 18. Une fois la cavité 18 remplie de matière plastique, on attend que la matière plastique injectée soit suffisamment résistante que pour pouvoir être démoulée. Cette opération est réalisée par déplacement de la partie mobile 16 dans le sens d'ouverture du dispositif 10, c'est-à-dire que la partie mobile 16 s'éloigne de la partie fixe 14 et l'élément 12 est ensuite éjecté du dispositif 10.

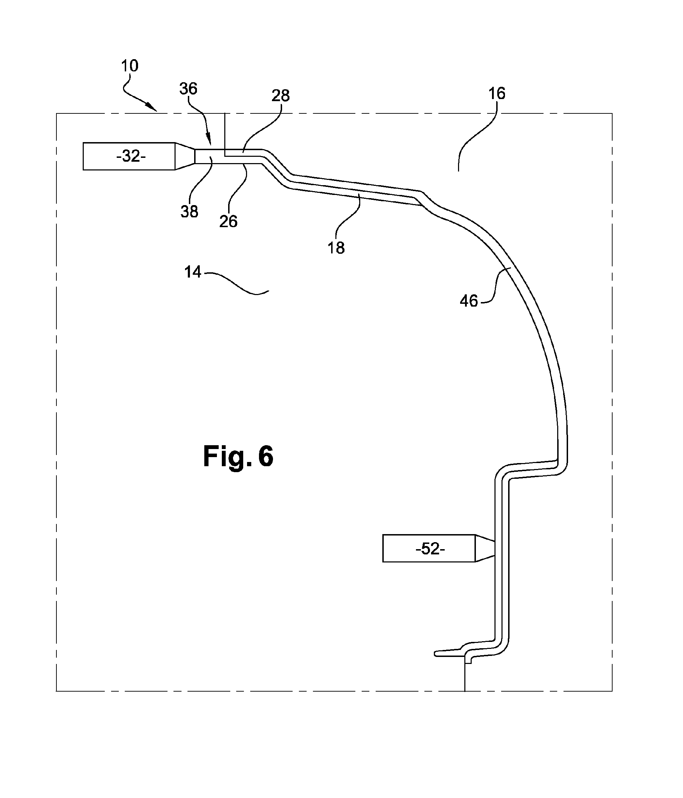

La figure 6 une vue partielle en coupe d'un dispositif selon un deuxième mode de réalisation de l'invention dans lequel les éléments communs aux deux modes de réalisation sont identifiés par les mêmes références numériques.

On a représenté sur la figure 6 un dispositif de moulage 10 d'une glace de projecteur pour véhicule automobile comprenant un élément en une première matière et un élément en une seconde matière, surmoulé sur l'élément dans la première matière.

Le dispositif 10 comprend une partie fixe 14 et une partie mobile 16 délimitant une cavité partiellement remplie par un élément en plastique 46 qui a été moulé sur un autre poste de manière connue. La cavité 18 est donc délimitée par la partie fixe 14 et l'élément 46. La cavité 18 pourrait également être délimitée par la partie fixe 14, la partie mobile 16 et l'élément 46.

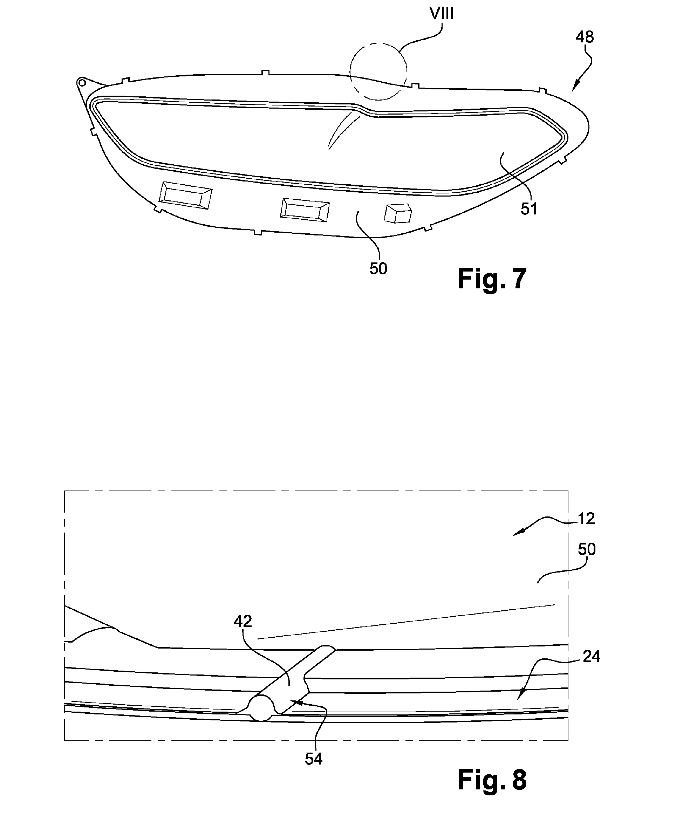

Dans le cas présent, cette cavité 18 est de forme générale annulaire, comme on peut le voir sur la figure 7 qui représente une glace 48 de projecteur pour véhicule automobile comportant un masque 50 de forme générale annulaire en plastique opaque surmoulé sur un élément 51 en plastique transparent.

La partie fixe 14 du dispositif 10 comporte une busette d'injection de matière plastique 52, localisée dans une région de la cavité 18, et qui est sensiblement perpendiculaire à la direction d'ouverture et de fermeture du dispositif 10. Cette busette 52 est une busette dont l'orifice de sortie est sensiblement circulaire.

Or cette busette 52 ne permet pas d'avoir un remplissage adéquat de la cavité annulaire 18. On positionne donc une deuxième busette d'injection 32 dans le fond 30 de la rainure 22 de la cavité 18 et on injecte la deuxième matière plastique par les busettes 52 et 32 pour obtenir le masque 50.

Afin de réaliser l'injection dans le fond 30 de la rainure 22, cette dernière comporte un élargissement localisé 36 formant un canal 38 de forme sensiblement de révolution.

Comme on peut le voir sur la figure 6, la lèvre 24, également appelée pied de glace, comporte une surépaisseur localisée 42 dont la section sur le bord libre 44 de la lèvre 24 est supérieure ou égale au diamètre de l'orifice de sortie 34 de la busette 32. Dans ce mode de réalisation, le diamètre de la section de la surépaisseur 42 est d'environ 4 mm. On comprend que le diamètre de la section de la surépaisseur 42 sur le bord libre 44 de la lèvre est déterminé en fonction du diamètre de l'orifice de sortie 34 de la busette, lui-même déterminé par les paramètres d'écoulement de la matière à injecter et de la forme de la cavité 18. Cette dimension est donc donnée purement à titre d'exemple et ne constitue donc pas une limitation.

On notera que l'on prévoit, pour connecter l'élargissement localisé 36 à la rainure 22, des aménagements dans le dispositif 10 permettant d'éviter toute arrête vive dans ce dernier. Ces aménagements se traduisent, sur la lèvre 24 par des ajouts de matières 54 à l'intersection entre la surépaisseur localisée 42 à la lèvre 24.

Grâce au dispositif de l'invention, on a ainsi pu éviter d'avoir à utiliser un canal froid ou d'avoir à augmenter l'épaisseur générale de la lèvre 24 afin de pouvoir injecter la matière plastique dans toute la cavité 18.

Nous allons maintenant décrire le procédé de fabrication de la glace 48 en plastique bi-matière par moulage par injection.

L'élément transparent 51 est par exemple moulé par injection par un procédé connu et placé dans le dispositif 10. La seconde matière est injectée par les busettes 32 et 52 dans la cavité 18 pour former un masque 50 opaque de la glace 48, la lèvre 24 de la glace 48 étant formée dans la seconde matière.

On notera enfin que l'invention n'est pas limitée aux modes de réalisation précédemment décrits.

En effet, il est possible, grâce au dispositif de l'invention de mouler un élément en plastique de forme générale annulaire sans qu'elle soit obligatoirement surmoulée ou en matière opaque. On peut envisager de réaliser l'injection de plus de deux matières.

Dans le deuxième mode de réalisation, l'élément à mouler comprend une surface sensiblement perpendiculaire à la direction d'ouverture et de fermeture du dispositif 10. On pourrait envisager qu'une telle surface n'existe pas et que le second élément soit entièrement injecté au moyen de busettes 32 réparties en au moins deux points du fond 30 de la rainure 22.

## Revendications

1. Dispositif de moulage (10) comprenant une cavité de moulage (18) d'un élément (12) en plastique et une busette d'injection (32) de matière plastique comprenant un orifice de sortie (34) de matière plastique, sensiblement circulaire, débouchant dans la cavité (18), cette cavité (18) comprenant une rainure (22) destinée à former une lèvre (24) de l'élément (12) en plastique,
**caractérisé en ce que** l'orifice de sortie (34) de la busette (32) débouche, par un fond (30) de la rainure (22), dans un élargissement localisé (36) de cette rainure (22) formant un canal (38) sensiblement de révolution dont l'extrémité de communication (40) avec l'orifice de sortie (34) de la busette (32) a un diamètre supérieur ou égal à celui de cet orifice de sortie (34), cet élargissement (36) étant destiné à former une surépaisseur localisée (42) de la lèvre (24) de l'élément (12) en plastique,
**et en ce qu'**il comporte au moins deux parties, respectivement fixe (14) et mobile (16), déplaçables l'une par rapport à l'autre sensiblement parallèlement à une direction dite d'ouverture et de fermeture du dispositif (10), l'orifice de sortie (34) de matière plastique de la busette (32) formant une extrémité d'un canal chaud d'éjection de matière plastique de cette busette (32), sensiblement perpendiculaire à la surface à injecter, au moins une de ces parties participant à la délimitation de la cavité (18).

2. Dispositif de moulage (10) selon la revendication 1, dans lequel la rainure (22) a une forme générale annulaire.

3. Elément (12) en matière plastique moulé par un dispositif de moulage (10) selon l'une quelconque des revendications précédentes, dans lequel la lèvre (24) de l'élément (12) en plastique a une forme générale divergente en s'éloignant d'un bord libre (44) de cette lèvre (24).

4. Elément (12) en matière plastique selon la revendication précédente, constituant un élément de glace de dispositif optique pour véhicule automobile, la lèvre (24) de l'élément (12) étant destinée à s'emboîter dans une rainure complémentaire d'un boîtier du dispositif optique, si bien que la surépaisseur (42) est au moins partiellement masquée dans la rainure complémentaire.

5. Elément (12) en matière plastique selon la revendication 4, dans lequel l'élément de glace est un masque de glace de projecteur pour véhicule automobile.

6. Procédé de fabrication d'un organe en plastique par moulage par injection, **caractérisé en ce que** l'on moule un élément au moins de cet organe dans un dispositif selon l'une quelconque des revendications 1 ou 2.

7. Procédé de fabrication d'un organe en plastique bi-matière par moulage par injection, **caractérisé en ce que** l'on moule un élément en une première matière puis on surmoule un élément en une seconde matière sur l'élément dans la première matière au moyen d'un dispositif selon l'une quelconque des revendications 1 ou 2, la lèvre (24) étant formée sur l'élément dans la seconde matière.

8. Procédé selon la revendication précédente, dans lequel la première matière est transparente et la seconde matière est opaque.

9. Glace pour projecteur de véhicule automobile, **caractérisée en ce qu'**elle est obtenue par un procédé selon l'une quelconque des revendications 6 à 8 et **en ce qu'**elle comporte une lèvre (24) comprenant une surépaisseur localisée (36) de forme sensiblement de révolution.
